# EUROPEAN PATENT APPLICATION

(11) **EP 2 116 287 A1**
(43) Date of publication of application: **11.11.2009**
(21) Application number: 07850271.3
(22) Date of filing: 07.12.2007
(51) Int. Cl.: A63F 13/12, A63F 13/10

(54) **GAME SYSTEM**

(30) Priority: 12.12.2006 JP 2006335082
(71) Applicant: Konami Digital Entertainment Co., Ltd., Tokyo 107-8324 (JP)
(72) Inventor: KOBAYASHI, Kenji, Minato-ku Tokyo 107-8324 (JP); MIKOSHIBA, Eiri, Minato-ku Tokyo 107-8324 (JP); NISHIMURA, Noriaki, Minato-ku Tokyo 107-8324 (JP); ASATO, Hiroshi, Minato-ku Tokyo 107-8324 (JP); TADA, Mitsuhiro, Minato-ku Tokyo 107-8324 (JP); ABE, Takahiro, Minato-ku Tokyo 107-8324 (JP); YAMADA, Sachi, Minato-ku Tokyo 107-8324 (JP); YACHI, Yu, Minato-ku Tokyo 107-8324 (JP); ONODERA, Nobuhiro, Minato-ku Tokyo 107-8324 (JP)
(74) Representative: Haley, Stephen
(86) International application number: PCT/JP2007/073684
(87) International publication number: WO 2008/072571

(57) **Abstract**

The present invention provides a game system in which a virtual player is set in consideration of information on a place where a player plays a game. Each of game machines 3A to 3F has game machine environment information on environment of a place where the game machine is mounted. A game server 3A has character information storage device 2e for storing information 40 on environment characters according to each kind of environment information of the game machines, selects an environment character 42 associated with an environment indicated by self-machine environment information 33 of the game machines 3A and 3B participating in a game, sets the selected environment character 42 as a character of a virtual player, makes the environment character set as the character of the virtual player participate in the game, and determines operations of the environment character 42 during the game.

## Description

### Technical Field

The present invention relates to a game system in which a game is executed by a plurality of game machines.

### Background Art

A network game system in which a game is executed by a plurality of game machines is already known (refer to, for example, Patent Documents 1 and 2). A game system is also known in which when a game is played by a predetermined number of players and the number of players who has entered the game is less than the predetermined number, the game is played by making a virtual player whose operation is controlled by a computer participate.
Patent Document 1: Japanese Patent Application Laid-Open No. 2001-120841
Patent Document 2: Japanese Patent Application Laid-Open No. 2006-223893

### Disclosure of the Invention

### Problem to be solved by the Invention

However, a game system in which a virtual player is set on the basis of information related to a place where a player plays the game does not exist.

An object of the present invention is, therefore, to provide a game system in which a virtual player is set in consideration of information related to a place where a player plays a game.

### Means for solving the Problem

A game system according to the present invention solves the above problem by the following construction. The game system comprises a plurality of game machines and a game server, the game machines and the game server capable of communicating data with each other via a network, among the plurality of game machines, a game being executed in which characters associated with players operating the game machines appear as the players, and progress of the game being controlled by the game server, wherein the game machine comprises : a game machine information storage device for storing self-machine information including self-machine environment information indicative of environment information on environment of a place where the gamemachine itself is mounted; and a participation notifying device for, when a player operating the self-machine participates in the game, transmitting to the game server, a participation notification including information on the player operating the self-machine and the self-machine environment information, and the game server comprises: a character information storage device for storing various environment information and information on environment characters prepared according to each kind of environment information; a virtual player setting device for selecting an environment character associated with the environment information indicated by the self-machine environment information included in the received participation notification with reference to the character information storage device, and setting the selected environment character as a character of a virtual player; and a virtual operation determining device for making the environment character set as the character of the virtual player appear in the game, and determining operations of the environment character during the game.

According to the game system of the present invention, each of the plurality of game machines has the environment information on the environment in which the game machine itself is mounted, and the environment character associated with the environment information included in the participation notification is selected by the virtual player setting device. The environment information included in the participation notification is the environment information of a game machine corresponding to a player actually participating in the game. Therefore, the environment character is set on the basis of the environment information of the place where the player plays the game. By setting the figure of the environment character so as to symbolize the environment information, a player can play the game as recognizing the environment of a remote place where a player plays the game. Thus, the interest of the game can be enhanced.

The environment information may be the information on the state of surround of the place where the game machine is mounted, and includes the sate caused by operations of nature such as weather information, temperature information, geological information, as well as the state caused by artificial operations. The operation contents of the environment character may be determined either based on information prepared for a virtual player or based on operation information which is included in the environment information as unique operation information to each environment character.

The game executed by the plurality of game machines may be a game requiring a predetermined number or more of players and, the virtual player setting device, in a case where the number of participation notifications received from the game machine is less than the predetermined number, may set the environment character as the character of the virtual player to arrange at least the predetermined number of players. Thereby, even though the game requires at least a predetermined number of players, by setting the environment character as the character of a virtual player, the game can be executed.

The game system may further comprise an environment server having: a server environment information storage device for storing server environment information in which each of the plurality of game machines, an observation location closest to the game machine among a plurality of observation locations in which a state for obtaining the environment information is observed, and the environment information of the observation location are associated with each other; and an environment information updating device for obtaining environment the information in each of the observation locations at a predetermined timing from a predetermined observation information database providing environment information in each of the observation locations to update the server environment information, wherein the game machine may comprise a self-machine environment information updating device for obtaining the environment information associated with the game machine itself from the server environment information at a predetermined timing to update the self-machine environment information in the environment information.

The environment information includes information which changes with lapse of time such as the weather information and the temperature information. According to the present invention, the environment server using the observation information database observing and providing the changeable information is provided. The environment server obtains the environment information from the observation information database at a predetermined timing and updates the server environment information held by itself. Further, each of the game machines can obtain the self-machine environment information from the environment server at a predetermined timing to update the self-machine environment information. Consequently, even in a case where the environment information changes, the actual environment information and the environment information in the self-machine environment information can be made coincident. The timing for update in the environment server and that in the game machine may be either periodical or nonperiodical. For example, the timing for update in the game machine may be a preset cycle, or an update request transmitted from the environment server may be used as a trigger for the update.

Specific environment information in the environment information in the observation information database may be set as the environment information in the character information storage device. Thereby, when special environment information in the environment information provided by the environment information database is set as the "specific environment information", the environment character associated with the special environment information can be made appear in the game.

When the selected environment character further satisfies a predetermined condition, the device for adjusting the number of players may set the selected environment character as the character of the virtual player. Thereby, it is possible to give a rarity value to the game where the environment character appears.

The game machine may comprise: a game master portion functioning as the game server; and a master activating device for activating the game master portion to make the game machine itself function as the game server in a predetermined case. Thereby, one of the game machines participating in the game can be made function as the game server. Even in a case where a plurality of games is executed at the same time, it is unnecessary to provide a plurality of game servers. A method of specifying the game machine where the game master portion is activated may be specified by a already-known method such as a method of specifying the game machine of a player who enters the game first.

### Effect of the Invention

As described above, in the present invention, the game machine holds the self-machine information including the self-machine environment information indicative of the environment information on environment of a place where the game machine itself is mounted. The game server obtains the self-machine environment information of the game machine corresponding to a player participating in the game, and makes the environment character associated with the self-machine environment information appear as the character of a virtual player in the game. In such a manner, the game system in which information on environment of a place where a player plays a game is considered can be provided.

### Brief Description of the Drawings

FIG. 1 is a diagram showing an example of a game system of the present invention.
FIG. 2 is a diagram showing a hardware configuration of a center server in the game system shown in FIG. 1.
FIG. 3 is a diagram showing an example of player information held by the center server shown in FIG. 2.
FIG. 4 is a diagram showing an example of server weather information held by the center server shown in FIG. 2.
FIG. 5 is a diagram showing a hardware configuration of a game machine in the game system shown in FIG. 1.
FIG. 6 is a diagram showing information held by the game machine shown in FIG. 2.
FIG. 7 is a sequence chart showing a state that weather information is updated in the game system shown in FIG. 1.
FIG. 8 is a flowchart showing procedures of a start process executed at the moment of logging into the center server at the game machine.
FIG. 9 is a diagram showing an example of a home image displayed on a monitor of the game machine.
FIG. 10 is a diagram showing a state that a warning message is displayed on the home image shown in FIG. 9.
FIG. 11 is a flowchart showing procedures of a home image display process.
FIG. 12 is a sequence chart showing processes executed in the center server and the game machine in a case where the picture letter creation is selected.
FIG. 13 is a sequence chart showing processes executed in the center server and the game machine in a case where a competition mode is selected.
FIG. 14 is a diagram showing an example of a continuation instruction image displayed on the monitor of the game machine.
FIG. 15 is a flowchart showing procedures of a process for adjusting the number of players.
FIG. 16 is a diagram showing the home image shown in FIG. 9 in which players including a ghost player and a weather character are displayed.
FIG. 17 is a flowchart showing procedures of exchange process.
FIG. 18 is a flowchart showing procedures of letter exchange process.
FIG. 19 is a diagram showing a state that obtained information is generated from the player information of a player as an exchange partner.
FIG. 20 is a sequence chart showing processes executed in the center server and the game machine in a case where a picture letter open is selected.
FIG. 21 is a diagram showing an example of a letter-opening instruction image displayed on the monitor of the game machine.
FIG. 22 is a diagram showing an example of an opened letter image displayed on the monitor of the game machine.
FIG. 23 is a diagram showing an example of the opened letter image in a case where an item is attached to the picture letter obtained.
FIG. 24 is a flowchart showing procedures of the letter-opening process.
FIG. 25 is a diagram showing an example of evaluation obtained information.
FIG. 26 is a flowchart showing procedures of evaluation updating process.
FIG. 27 is a flowchart showing procedures of positive-evaluation updating process.
FIG. 28 is a flowchart showing procedures of negative-evaluation updating process.
FIG. 29 is a sequence chart showing processes executed in the center server and the game machine in a case where a positive evaluator list is selected.
FIG. 30 is a diagram showing an example of a list displaying image in which a memory list is displayed.

### Best Mode for carrying out the Invention

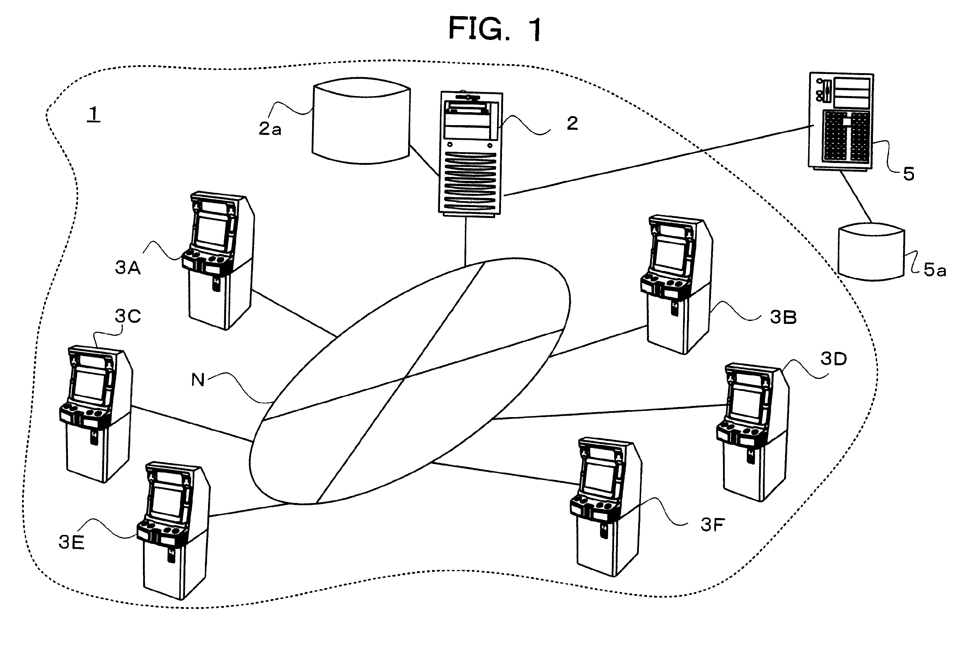

FIG. 1 is a diagram showing an example of a game system 1 of the present invention. In the game system 1, a center server 2 having a sever storage portion 2a and a plurality of game machines 3A · · · 3F can be connected via a network N. Each of the plurality of game machines 3A · · · 3F is a commercial game machine mounted in any of a game center, game corners in shops, and the like across the country. The game system 1 of the present embodiment provides a multiplayer network game (hereinbelow, called "game") to be executed by players operating four game machines. When the number of players entering in the game is less than four, the game is established by including a virtual player controlled by a computer (hereinbelow, called "a ghost player". Moreover, actual players will be also called "real players" in contrast to the ghost player). In the following, when the game machines 3A, 3B, 3C, 3D, 3E, and 3F do not have to be distinguished from each other, they will be called game machine 3. The network N may be a public line or a dedicated line.

The center server 2 can be also connected to a weather information providing server 5 that provides weather information stored in a weather database 5a. The weather information providing server 5 is, for example, a server provided in an institute for providing weather information of each observation point on the basis of data observed in the observation point. The institute may be public or private one. The weather information is information indicative of a state of weather in an observation point, and is associated with the observation point to be held in the weather database 5a. The hardware configuration of the center server 2 and the game machine 3 will be described later.

In the game system 1, when picture letters as message information are created by players in advance, the picture letters are exchanged among the players participating in the game. A player who obtains a picture letter from another player can evaluate the obtained picture letter. The evaluation is reflected in both the player who obtained the picture letter and the player who sent the picture letter. The game machine 3 provides, for example, a letter mode in which the player can create or read a picture letter separately from a play mode in which a competition game can be executed by a plurality of players. In the present embodiment, a concept including the play mode and the letter mode will be called a multiplayer network game or simply a game. A game in the play mode can be played as a competition game, a training game, a preparatory game, or the like. A multiplayer game accompanying no competition is also possible. A good evaluation made by a player who obtained a picture letter will be described as positive evaluation, and a bad evaluation will be described as a negative evaluation.

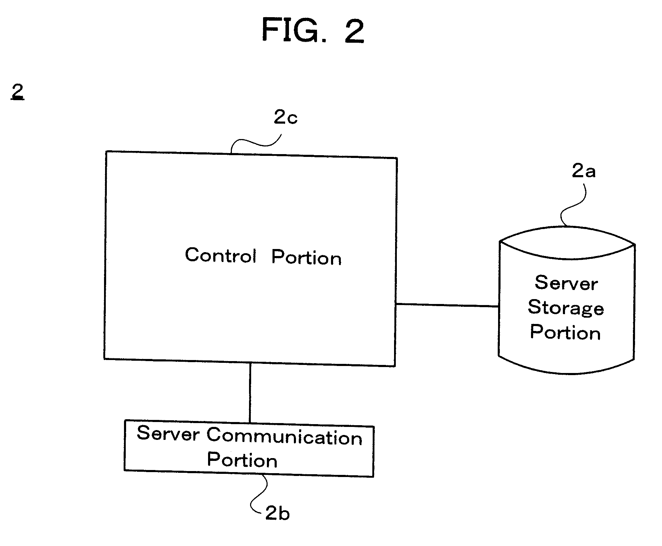

The hardware configuration of the center server 2 will be described with reference to FIG. 2. The center server 2 has a sever storage portion 2a, a server communication portion 2b for communicating data with the game machines 3 and the weather information providing server 5, and a control portion 2c for controlling the operation of the center server 2. The control portion 2c is constructed as a computer having a CPU and various circuits necessary for the operation of the CPU such as a RAM and a ROM. The control portion 2c controls the operation of the server communication portion 2c and manages data stored in the sever storage portion 2a. In the sever storage portion 2a, programs for making the control portion 2c control various processes in the center server 2 and data to be provided to the game machines 3 are stored. The data to be provided to the game machine 3 includes player information 10 which is information of players and server weather information 20.

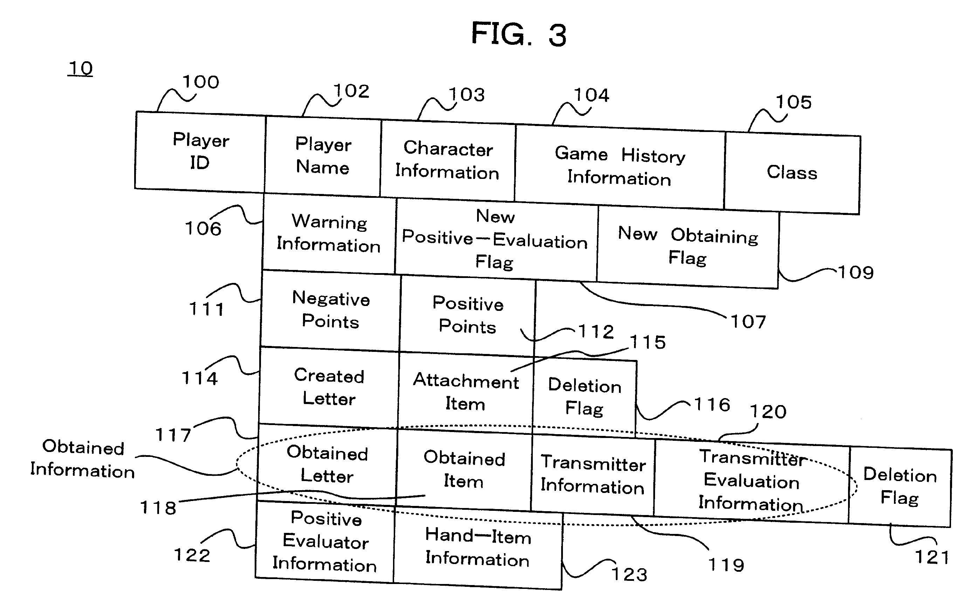

FIG. 3 shows the player information 10 of the present embodiment. A player ID 100 is player identification information for identifying a player. It is used for identifying a player in the game system 1. A player name 102 is the name of a player used in the game system 1. Character information 103 is information regarding a character used as an avatar of a player in the game system 1.

Game history information 104 is history information regarding a play result of a player in the play mode and is, for example, a score of a competition game, a score of training and preparation, operation tendency, and the like. A class 105 shows a game skill in the play mode, and five classes from class A to class E are prepared in the present embodiment. Warning information 106 is information indicative of a state regarding warning for a player, and there are three kinds of "no warning", "warning message display", and "use prohibition". A new positive-evaluation flag 107 indicates that a positive evaluation is received from the exchange partner in the on-state. A new obtaining flag 109 indicates that a picture letter is newly obtained when the flag 109 is in the on-state.

A negative points 111 is an accumulation point of negative evaluations made by exchange partners. A positive points 112 is accumulated points of the positive evaluations made by exchange partners. As described above, the negative points 111 and the positive points 112 are evaluations accumulated by the other players to the player corresponding to the player ID 100 and are used as evaluation information of the player.

A created letter 114 is a picture letter created by the player. An attachment item 115 is an item to be attached to the created letter 114. There is a case that any item is not attached to the created letter 114. A deletion flag 116 indicates that the created letter 114 is deleted when the flag 116 is in the on-state. In what follows, the just "created letter 114" means the created letter 114 in the state where the deletion flag 116 is off.

An obtained letter 117 to transmitter evaluation information 120 is information related to an obtained picture letter, which is called the obtained information in the present embodiment. The obtained latter 117 is the picture letter obtained from the exchange partner. An obtained item 118 is an item attached to the obtained latter 117. There is a case that no item is attached to the obtained letter 117. Transmitter information 119 is information related to the transmitter of the obtained latter 117, that is, the exchange partner. For example, it is the player name 102 or character information 103 of the exchange partner. Transmitter evaluation information 120 is evaluation information of the transmitter and the negative points 111 and the positive points 112 associated with the transmitter in the present embodiment. A deletion flag 121 is associated with the obtained information and indicates that the obtained information is deleted when the flag 121 is in the on-state. Hereinbelow, the just "obtained letter 117" and just "obtained information" means the obtained letter 117 and the obtained information in the state where the deletion flag 121 is off, respectively.

Positive evaluator information 122 is accumulation information related to players who evaluated positively a picture letter created by the player corresponding to the player ID 100. The positive evaluator information 122 includes the player name 102, the character information 103, and the like of each of the players. Hand-item information 123 is information related to items held by the player ID 100. The hand-item information 123 includes an item obtained as the obtained item 118. The player information 10 in the present embodiment is information excluding the created letter and the obtained letter when the deletion flags 116 and 121 are in the on-state.

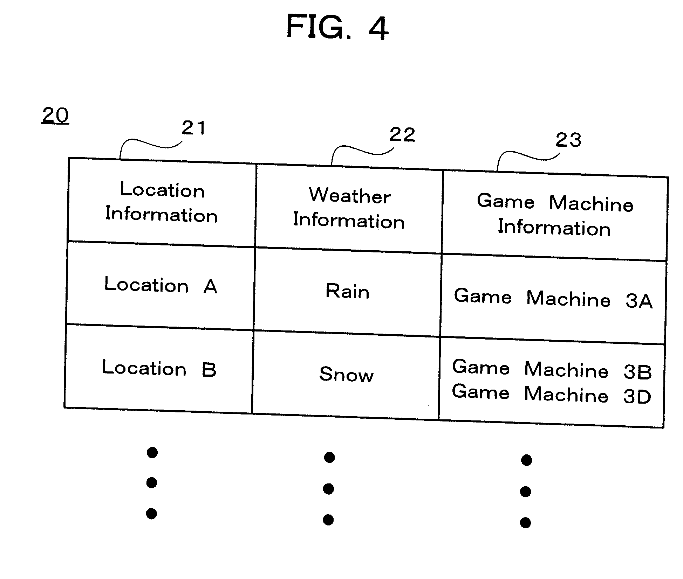

The server weather information 20 stored in the sever storage portion 2a will be described. The server weather information 20 is constructed by, as shown in FIG. 4, location information 21, weather information 22 of the location, and game machine information 23. The location information 21 is information indicating an observation location closest to the place where the game machine 3 of the game machine information 23 is mounted. The weather information 22 is information obtained as the weather information of the location information 21 from the weather information providing server 5. The game machine information 23 indicates a game machine 3 whose observation location is closest to the observation location indicated by the location information 21.

For example, in the example of FIG. 4, the observation location closest to the game machine 3A is an observation location A, and the weather is "rain". Additionally, there is a case that the number of observation locations closest to two or more game machines 3 is one. In this case, a plurality of game machines 3 are associated with the observation location B.

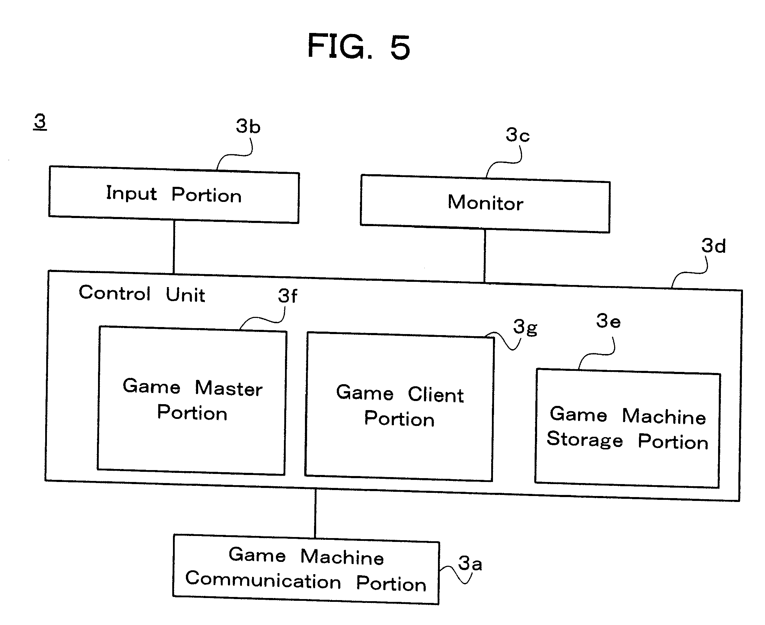

The hardware configuration of the game machine 3 will be described with reference to FIG. 5. The game machine 3 comprises a game machine communication portion 3a for communicating data with other game machines 3 and the center server 2, an input portion 3b for receiving operations of a player, a monitor 3c for displaying various information, and a control unit 3d for controlling the operation of the game machine. The control unit 3d is constructed as a computer obtained by assembling a CPU and a game machine storage portion 3e as a storage area including a RAM and a ROM necessary for the operation of the CPU. In the present embodiment, one of the plurality of game machines 3 participating in a competition game functions as a game master that controls progress of the competition game. Therefore, the control unit 3d has two logical configurations of a game master portion 3f functioning as a game master and a game client portion 3g functioning in a similar manner to the other game machines 3.

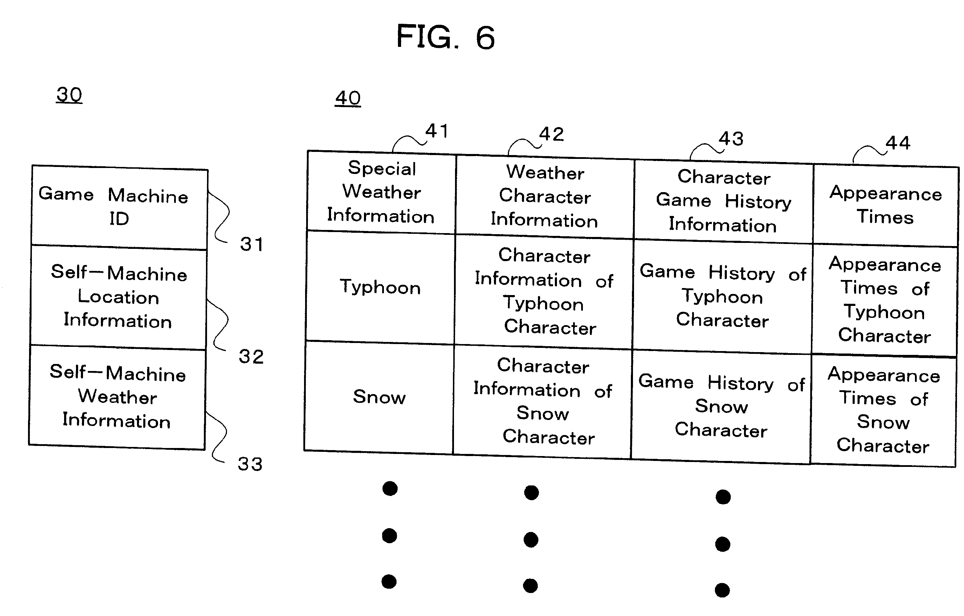

In the game machine storage portion 3e, a program for executing the game in the game machine 3 under control of the control unit 3d and various data necessary for the control are stored. The data stored in the game machine storage portion 3e includes, as shown in FIG. 6, game machine information 30 and special character information 40 related to weather characters as special characters. The game machine information 30 includes a game machine ID 31 as identification information for identifying a game machine in the game system, a self-machine location information 32 indicative of a location in which the game machine is mounted, and self-machine weather information 33.

The special character information 40 is constructed by special weather information 41, weather character information 42, character game history information 43, and appearance times 44. The special weather information 41 is the weather which is set as a special weather in the game system 1. In the present embodiment, the weather information unique to a location such as "snow" or "typhoon", except "fine", is set. In the weather character information 42, identification information of the weather character, a figure, a name, and the like are set. The weather character is prepared as a character unique to the special weather information 41 and is used as the ghost player. The weather character includes, for example, a snow character and a typhoon character. An Animal, a plant, or the like peculiar to the location in which the game machine 3 is mounted can be also used as the character. The character game history information 43 is information corresponding to the game history information 104 of the player information 10. On the basis of this information, the operations of the weather character are determined, when the game is established by using the weather character as the ghost player. The appearance times 44 is accumulated total of the number of times that the weather character appeared in the competition game.

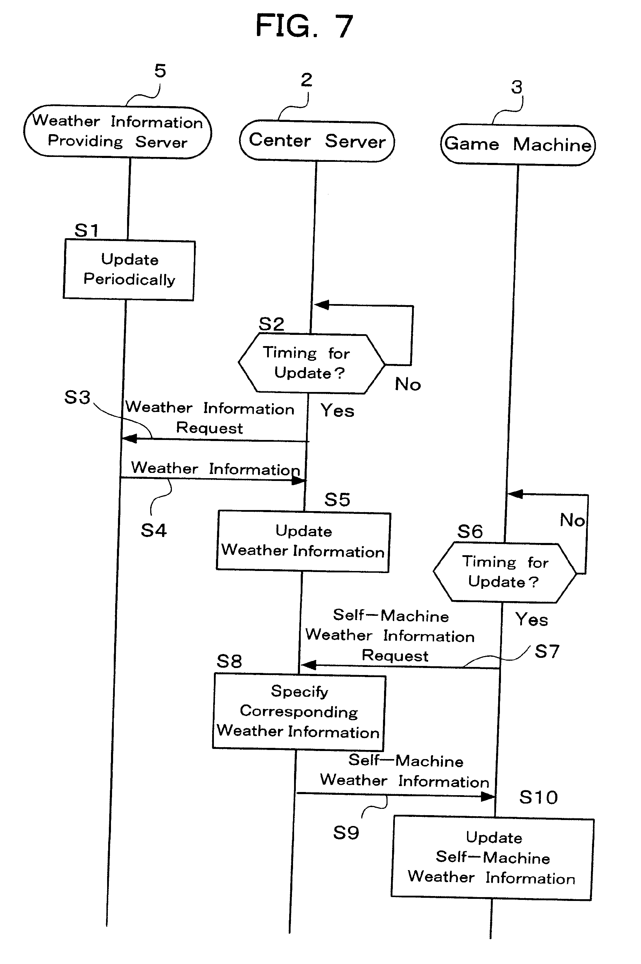

As described above, the server weather information 20 is held in the center server 2. In each of the game machines 3, the self-machine weather information 33 is held. Since the weather information changes with time, the game system 1 is configured so that the weather information is updated periodically irrespective of player's operations. Thereby, the weather information to be recognized in the game system 1 and actual weather can be matched. A state where the weather information is updated will be described with reference to a sequence chart of FIG. 7. Additionally, processes in the center server 2 are controlled by the control portion 2c, and processes in the game machine 3 are controlled by the control unit 3d.

The weather information of the weather information providing server 5 to be provided to the center server 2 is updated at a predetermined timing (step S1). In the center server 2, an update cycle for periodically updating the server weather information 20 is preset to determine whether the timing for update reaches (step S2). When the timing for update reaches, the center server 2 transmits to the weather information providing server 5, a weather information request of requesting the weather information related to the observation location indicated by the location information 21 in the server weather information 20 (step 53). The weather information providing server 5, when receiving the weather information request, provides to the center server 2, the weather information of all of observation locations requested (step S4). The center server 2 updates the weather information 22 stored in the sever storage portion 2a of itself on the basis of the weather information obtained (step S5).

On the other hand, also in the game machine 3,in order to update the self-machine weather information 33 periodically, the update cycle is preset to determine whether the updating timing reaches (step S6). When the updating timing reaches, the game machine 3 transmits to the center server 2,the self-machine weather information request including the game machine ID 31 of itself (step S7). When receiving the self-machine weather information request, the center server 2 refers to the server weather information 20 to specify the weather information 22 associated with the game machine 3 which has transmitted the request (step S8). In the present embodiment, the weather information 22 corresponding to the game machine ID 31 included in the self-machine weather information request is specified. Subsequently, the center server 2 provides to the game machine 3, the specified weather information 22 as the self-machine weather information (step S9). The game machine 3 which has obtained the self-machine weather information from the center server 2 updates the self-machine weather information 33 held in the game machine storage portion 3e with the obtained self-machine weather information (step S10).

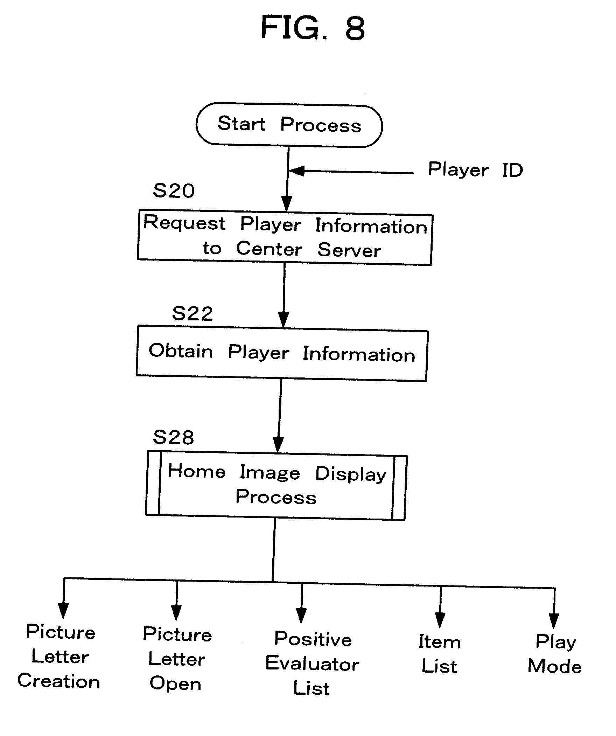

In what follows, the processes related to the picture letter in the game system 1 will be mainly described. The flow of a start process executed in the game machine 3 when a player starts a game in the game machine 3, that is, when the player logs in the center server 2 will be described with reference to a flowchart of FIG. 8. The start process is controlled by the control unit 3d of the game machine 3.

First, in step S20, when a predetermined game value is input by a player operating the game machine itself (hereinbelow, called "the player P") and a predetermined log-in operation such as entry of a player ID is performed, the game machine 3 requests the center server 2 for the player information 10 of the player P. In the center server 2, the player information 10 of the player P is specified from the player information 10 stored in the sever storage portion 2a and is provided to the game machine 3. In step S22, when the player information 10 is obtained from the center server 2, the player information 10 is stored in the game machine storage portion 3e as the player information 10 of the player P. The processes related to the player information 10 in the game machine 3 are executed with reference to the player information 10 stored in the game machine storage portion 3e.

After that, the process advances to step S28, a home image display process is executed. The home image is displayed on the monitor 3c, and the procedures advance to each process selected by the player. The home image display process will be described later.

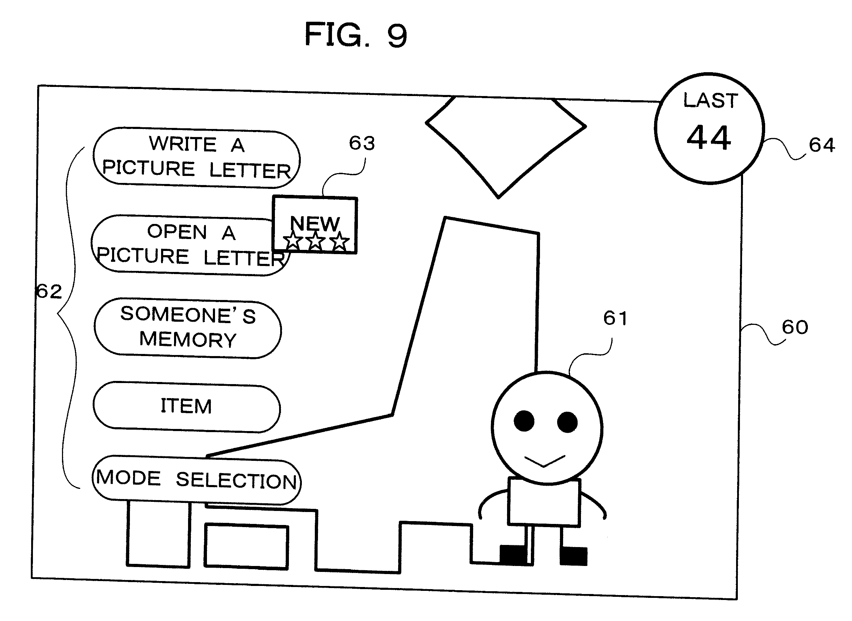

FIG. 9 shows an example of the home image 60. In the home image 60, a character 61 which is the avatar of the player P is displayed on the basis of the character information 103, and five process options 62 which can be selected by the player P are displayed. When "WRITE A PICTURE LETTER" is selected, a picture letter creation in the letter mode is started. When "OPEN A PICTURE LETTER" is selected, the picture letter obtained in the letter mode is opened. When "SOMEONE' S MEMORY" is selected, a list of players who positively evaluated the player P in the letter mode is displayed. When "ITEM" is selected, a list of items held by the player P is displayed in the similar way. When "MODE SELECTION" is selected, a play mode in which a competition game, a multiplayer game, a game for training, and the like can be executed is set.

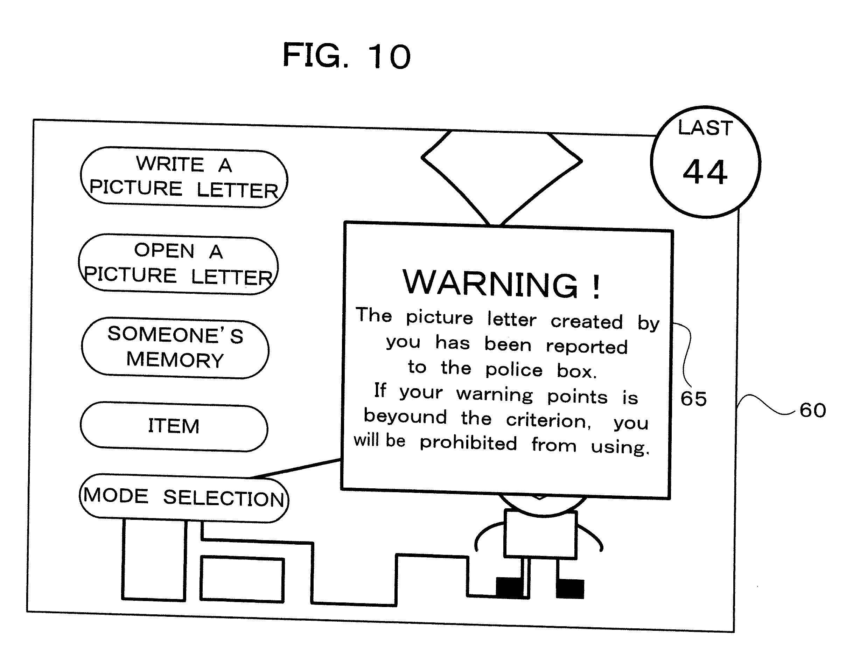

A new notification 63 is an indicator to notify the player P of addition of new information. In the present embodiment, in a case where a new picture letter is obtained, the new notification 63 is displayed at the "OPEN A PICTURE LETTER". When the positive evaluation is received newly, the new notification 63 is displayed in the "SOMEONE'S MEMORY". In the upper right corner of the image, remaining time 64 for notifying of remaining time to the end of the game is displayed. The remaining time 64 is remaining time in which a game is available, and decreases with lapse time after the game starts. In a case where the negative evaluation is received with respect to the picture letter transmitted from the player P, a warning message 65 as shown in FIG. 10 is displayed in the home image 60 to warn the player P. When the player P has received a predetermined number of negative evaluations or more, he/she is prohibited to use the letter mode. A predetermined use prohibition message is displayed, and the player P cannot enter the letter mode.

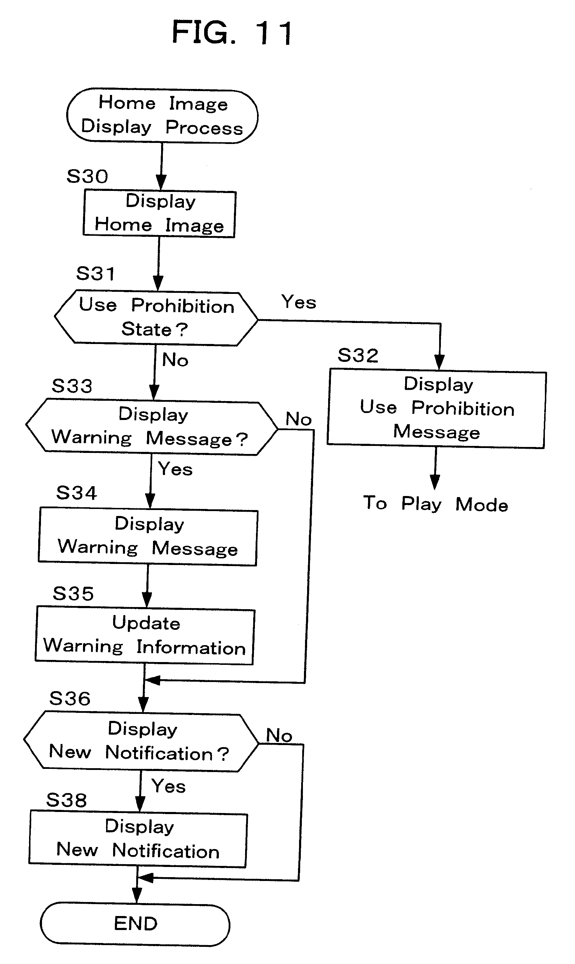

The home image display process will be described with reference to a flowchart of FIG. 11. The home image display process is controlled by the control unit 3d of the game machine 3. First, in step S30, the game machine 3 obtains the figure information of the character 61 from the character information 103 of the player P to display the home image 60 on the monitor 3c. Subsequently, in step S31, it is determined whether the sate is the use prohibition state or not. In the present embodiment, when the warning information 106 of the player P indicates "use prohibition", it is determined that the state is the use prohibition state. In a case of the use prohibition state, the process advances to step S32 to directly jump to the play mode after displaying the use prohibitionmessage. Thereby, the player P cannot enter the letter mode. In a case of not the use prohibition state, the process advances to step S33 to determine whether the warning message 65 should be displayed or not. In the present embodiment, in a case where the warning information 106 of the player P indicates "warning message display", it is determined to display the warning message 65. In a case of displaying the warning message 65, the process advances to steps S34 and 535.

In step S34, the warning message 65 is displayed in the home image 60. In step S35, the warning information 106 is updated with "no warning". The updated warning information 106 is transmitted to the center server 2 at an appropriate timing to update the warning information 106 in the player information 10 in the sever storage portion 2a. As will be described later, the "warningmessage display" is set when the negative evaluation is received. By this update process, each time the negative evaluation is received, the warning message is displayed once. In a case where the warning message 65 should not be displayed, the process advances to step S36. In step S36, it is determined whether the new notification 63 is displayed or not. In the present embodiment, in a case where the new obtaining flag 109 of the player P is in the on-state, the new notification 63 is added to the "OPEN A PICTURE LETTER". In a case where the new positive evaluation flag 107 is in the on state, the new notification 63 is added to the "SOMEONE' S MEMORY". The warning message 65 and the new notification 63 may be displayed in any order.

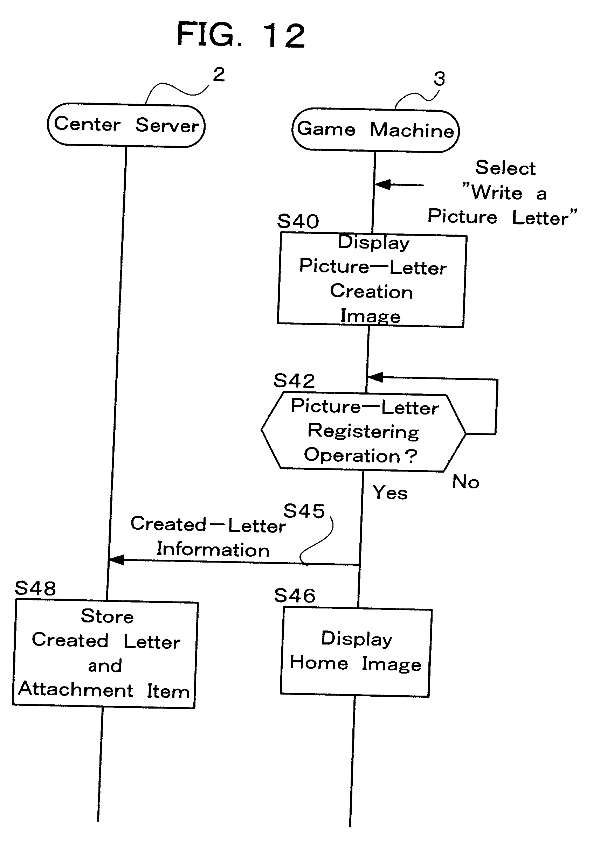

Processes executed in the game machine 3 and the center server 2 in a case where the picture letter creation is selected in the home image 60 will be described with reference to a sequence chart of FIG. 12. The processes in the game machine 3 are controlled by the control unit 3d, and the processes in the center server 2 are controlled by the control portion 2c. When "WRITE A PICTURE LETTER" in the letter mode is selected, the game machine 3 displays a picture-letter creation image (not shown) (step S40). In the picture-letter creation image, the player P can input pictures and characters from the input portion 3b to create an original picture letter. It is also possible to prepare a plurality of kinds of templates for the picture letter. Only by selecting a desired picture letter by the player P, the picture letter can be created.

Moreover, by performing a predetermined item attaching operation, an item held by the player P can be attached to the created picture letter. The item to be attached can be selected from the hand-item information 123. The item in the present embodiment may be a game item used in a competition game or an item unique to the player P, which is not related to the competition game. When a predetermined picture-letter registering operation is performed by the player P (step S42), created-letter information regarding the player P is transmitted to the center server 2 at an appropriate timing (step S45).

The created-letter information includes the created picture letter and, if the item is attached to the picture letter, the item to be attached. The game machine 3 which has transmitted the created-letter information displays the home image 60 and returns to a process selection state (step S46). The center server 2 which has received the created-letter information sets the deletion flag 116 to the on-state when the created letter 114 already exists in the player information of the player P, and sets the created picture letter as the created letter 114. In a case where the item to be attached is included, the item is stored as the attachment item 115 associated with the created letter in the sever storage portion 2a (step S48).

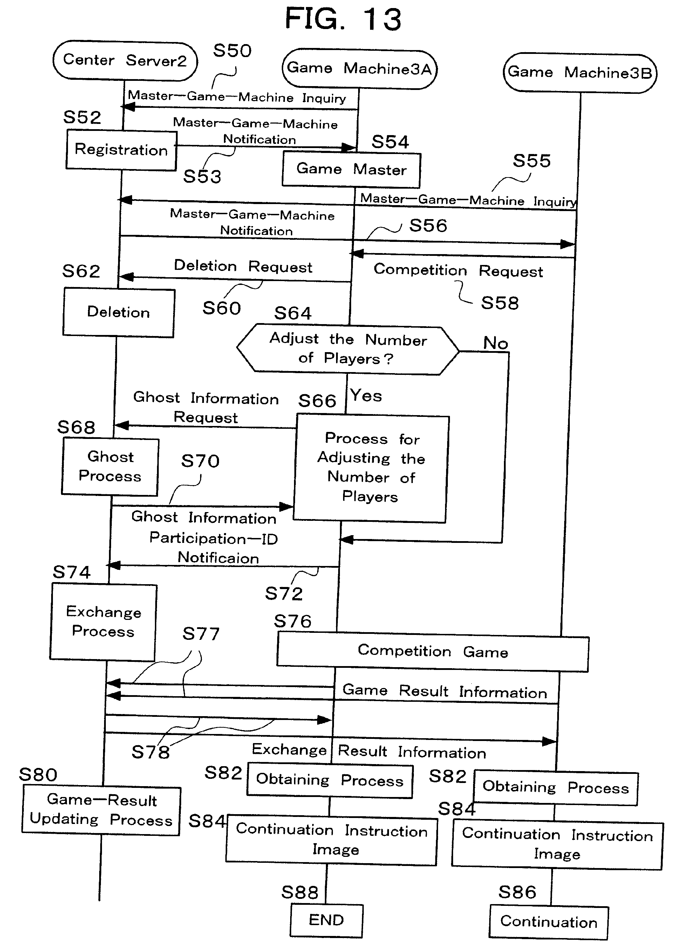

Next, the processes executed in the center server 2 and the game machine 3 will be described with reference to FIGS. 13 to 19. The processes are for inquiring the center server 2 of the presence or absence of a master game machine functioning as a game master, when a competition mode is selected from the play mode in the game machine 3. As described above, four players are necessary for the competition game of the presented embodiment. In the present embodiment, the case where only two real players enter the competition game (the case where a player PA operating the game machine 3A and a player PB operating the game machine 3B, the players PA, PB having the same class 105, enter the game) will be described. First, the flow of processes executed in the center server 2 and the game machines 3A and 3B will be described with reference to a sequence chart of FIG. 13. The processes in the center server 2 are controlled by the control portion 2c, and the processes in each of the game machines 3A and 3B are controlled by the control unit 3d.

When the competition game is selected from the play mode, for inquiring of the master game machine, the game machine 3A transmits to the center server 2, a master-game-machine inquiry including the game machine ID 31 of the game machine 3A, and the player ID 100 and the class 105 of the player PA (step S50). The center server 2 determines whether there is a game machine registered as the master game machine or not with respect to the class 105 included in the master-game-machine inquiry. In the present embodiment, as the master game machine related to the class 105 of the player PA is not registered yet, the game machine 3A is registered as the master game machine related to the class 105 of the player PA (step S52). The center server 2 transmits to the game machine 3A, a master-game-machine notification indicating the game machine 3A as the master game machine (step S53). When the game machine 3A receives the master-game-machine notification indicating itself as the master game machine, the game machine 3A activates the function of the game master and waits for a competition request fromanother game machines 3 (step S54). Thereby, the game machine 3A functions as the game master in addition to performing similar functions to the other game machines 3. The game machine 3A functioning as the game master will be also called the master game machine 3A.

On the other hand, the master-game-machine inquiry including the game machine ID 31 of the game machine 3B, the player ID 100 of the player PB, and the class 105 is also transmitted to the center server 2 from the game machine 3B where the competition game has been selected from the play mode (step S55). As the master game machine 3A related to the same class 105 as that of the player PB is already registered, the center server 2 transmits to the game machine 3B, the master-game-machine notification indicating the game machine 3A as the master game machine (step S56). When receiving the master-game-machine notification, the game machine 3B transmits the competition request including the player ID 100 of the player PB and the game machine information 30 to the game machine 3A as the master game machine (step S58).

In a case where predetermined time elapses after the master game machine 3A entered the competition-request wait state, or in a case where three competition requests are received, the master game machine 3A finishes accepting the competition request and transmits to the center server 2, a deletion request of the registration as the master game machine (step S60). The center server 2 which has received the deletion request deletes the game machine 3A from the registration of the master game machine (step S62). The master game machine 3A which has transmitted the deletion request determines whether a process for adjusting the number of players is necessary or not (step S64). In a case where two or less competition requests have been received, the process advances to the process for adjusting the number of players (step S66). In the process for adjusting the number of players, a process for preparing four of players is executed.

The details of the process executed in the process for adjusting the number of players will be described later. In the process for adjusting the number of players, a ghost information request including the player ID and the class 105 of a real player, and the required number of players is transmitted to the center server 2, and ghost information used as the player information of the ghost player is obtained (step S66). In the center server 2 which has received the ghost information request, a ghost process is executed (step S68). In the ghost process, referring to the player information 10 in the sever storage portion 2a, the center server 2 selects the player information 10 in accordance with the requested number of players, the player information having the player ID different from the player ID included in the ghost information request and having the same class 105 as the class 105 included in the ghost information request. In the process for adjusting the number of players, in a case where a specific condition is satisfied, the weather character 42 is set as the ghost player. The selected player information 10 is transmitted as the ghost information to the master game machine 3A (step S70).

After completion of the process for adjusting the number of players, the master game machine 3A transmits to the center server 2, a participation-ID notification including the player IDs 100 of the players to participate in the game and the self-machine location information 32 of the game machine 3 corresponding to each of the players (step S72). Additionally, a ghost flag is added to the player ID corresponding to the ghost player. In a case where the weather character 42 of the special character information 40 is set as the ghost player, information related to the weather character 42 is not included. When receiving the participation-ID notification, the center server 2 executes an exchange process (step S74). In the exchange process, a combination of players exchanging the picture letters is determined and the picture letters are exchanged. In the present embodiment, as a condition of setting a player as an object person for exchange is set, some players could not be set as the object person for exchange. The exchange process will be described later. On the other hand, after transmitting the participation-ID notification, the master game machine 3A stops communicating with the center server 2, and transmits the ghost information and the special character information 40 of the weather character to the game machine 3B to start the competition game (step S76).

As described above, the game machine 3A functions as the game master in the competition game. The function as the game master in the competition game may be similar to that of a known game system in which one of a plurality of game machines functions as the game master. For example, each of the game machines 3 updates the game information with respect to the competition game in reply to operations of the player P operating the game machine 3 itself. The master game machine 3A controls the entire progress of the competition game by transmitting operation results of each player, determining win or defeat of the game, and the like. When the ghost player exists, the master game machine 3A determines operations of the ghost player on the basis of the game history information 104 and 43 corresponding to the ghost player.

When the competition game finishes, the game machines 3A and 3B transmit to the center server 2, the game result information of the real players PA and PB, respectively (step S77). The game result information includes game update information for updating the game history information 104 of the real players PA and PB. The game history information 104 used as the ghost information is not updated. When receiving the game result information, the center server 2 transmits exchange result information including the obtained information in the player information 10 of the player P to the game machine 3 operated by the player P determined as the object person for exchange (step S78). The center server 2 executes a game-result updating process for updating each player information 10 on the basis of the received game result information (step S80). The game machine 3 which received the exchange result information executes an obtaining process (step S82). In the obtaining process, the deletion flag of obtained information already existing is set to the off-state, the obtained information included in the exchange result information is set in the player information held by the game machine 3, the new obtaining flag is set to the on-state, and the deletion flag 116 of the created letter is set to the on-state.

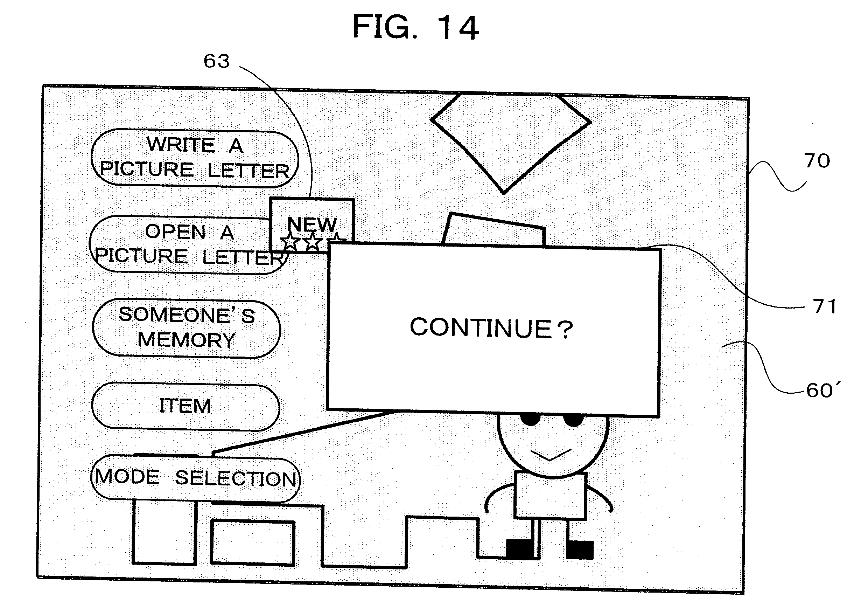

After the competition game finishes, in each of the game machines 3, a continuation instruction image 70 as shown in FIG. 14 is displayed (step S84). In the continuation instruction image 70, for example, a continuation message 71 for suggesting continuation is displayed on a home image 60' in a shadowed state. In the continuation instruction image 70, in a case where the player becomes the object person for exchange in step 574, as the new obtaining flag 109 is in the on-state, the new notification 63 is added to "OPEN A PICTURE LETTER" in the home image 60' and is displayed. Consequently, the player can recognize that the picture letter is obtained from any one of the players who played the competition game together.

When a predetermined continuation operation is performed by the player to the continuation instruction screen 70, the continuation message 71 and the shadow on the home screen 60' are deleted, and only the home image 60 is displayed. Then, it becomes possible to continue the game (step S86). As the predetermined continuation operation, for example, input of a game value can be adopted. Therefore, by displaying the home image 60' on the continuation instruction screen 70, it is possible to prompt the input of the game value from the player. On the other hand, when the predetermined continuation operation is not performed, the game is finished (step S88).

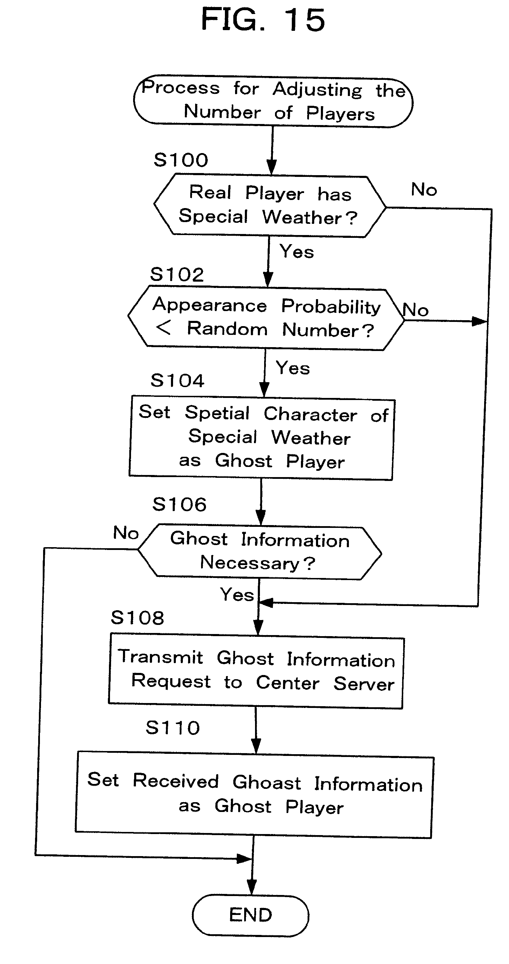

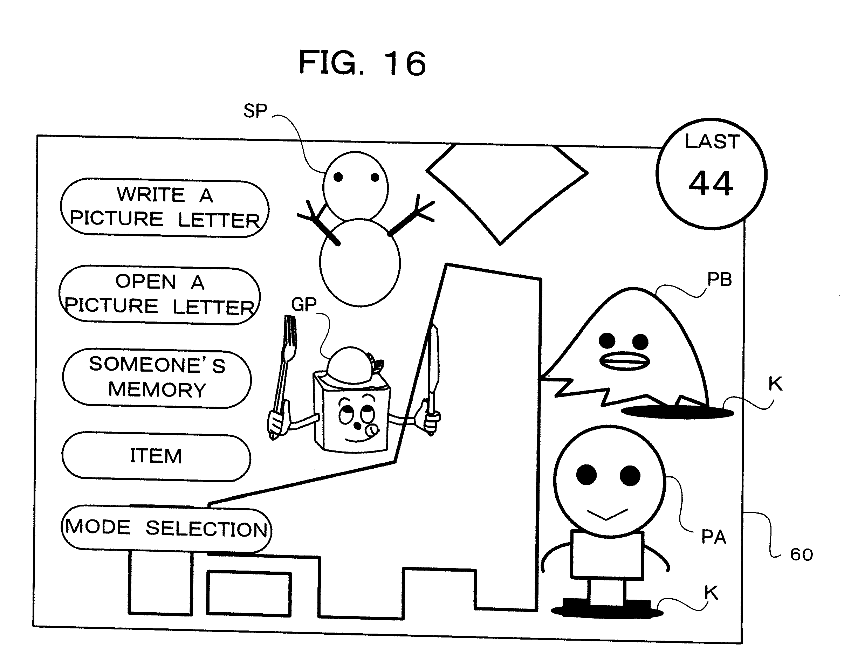

The processes executed in the process for adjusting the number of players will be described with reference to a flowchart of FIG. 15. Each of the processes in the process for adjusting the number of players is controlled by the game master portion 3f of the game machine 3A. In the present embodiment, the case where four players shown in the home image 60 in FIG. 16 are arranged by the process for adjusting the number of players will be described. In FIG. 16, for convenience of explanation, each of characters displayed will be described as a player. The four players in the present embodiment are the players PA and PB as real players, a snow character SP of the special character information 40, and the ghost player GP. In the present embodiment, although the real players PA and PB are displayed with a shadow K, the ghost player GP and the snow character SP are displayed without the shadow K.

Referring again to FIG. 15, first, in step S100, it is determined whether either the real player PA or the real player PB who have applied to the game entry is a player of the special weather. For example, it is determined whether the self-machine weather information 33 included in the received competition request or the self-machine weather information 33 of the game machine itself is the special weather information 41 or not. In a case where the special weather does not exist, the process advances to step S108. In a case where the special weather exists, the process advances to step S102. In the present embodiment, it is assumed that the self-machine weather information 33 of the game machine 3A is "fine", and that of the game machine 3B is "snow". In this case, "snow" is determined as the special weather, thereby the process advances to step S102.

In step S102, the appearance probability of the special character, that is, the snow character SP and a random number are compared to each other. The appearance probability of the snow character SP is calculated on the basis of the appearance times 44 of the snow character SP. In a case where the appearance probability is larger than the random number, the process advances to step S108 not to make the special character appear. In a case where the appearance probability is smaller than the random number, the process advances to step S104 to make the snow character SP appear, where the special character information 40 related to the snow character SP is set as the ghost player. At the moment of setting the ghost player, the appearance times 44 of the snow character SP held in the game machine 3A is incremented by one. Thereby, a character according to the weather of the location in which the real player plays appears as the ghost player.

After that, the process advances to step S106 and it is determined whether further ghost information is necessary or not. In a case where, even when the snow character SP is set as the ghost player, the number of players is still less than four, it is determined that further ghost information is necessary, and the process advances to step S108. In the present embodiment, even after the snow character is set as the ghost player, one more player is still necessary. Therefore, it is determined that further ghost information is necessary. On the other hand, In a case where the number of players reaches four, it is determined that further ghost information is unnecessary, and the process for adjusting the number of players is finished.

In step S108, the ghost information request is transmitted to the center server 2. The ghost information request includes the player IDs 100 of the real players PA and PB, the requested number of players, and the class. In the present embodiment, the requested number of players is one, and the class is the class 105 of the player PA. As described above, the center server 2 selects the ghost information and transmits it to the game machine 3A. When the ghost information is obtained from the center server 2, the ghost information received in step S110 is set as the ghost player GP. As described above, the player information 10 is used as the ghost information. Consequently, for identifying the ghost information, the ghost flag is added to the obtained ghost information in the present embodiment.

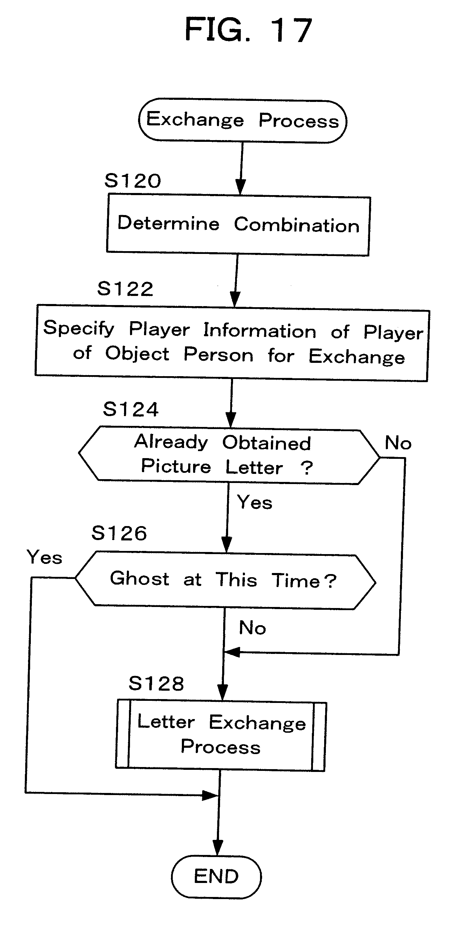

The processes executed in the exchange process will be described with reference to a flowchart of FIG. 17. The exchange process is controlled by the control portion 2c of the center server 2. First, in step S120, the combination of players to exchange the picture letters is determined. With reference to the sever storage portion 2a, the player information 10 corresponding to each of the ghost player GP and the real players PA and PB included in the participation -ID notification is extracted. The players having only the created letters 114 or the players having the created letters 114 with which the attachment item 115 is associated are combined. At the moment of determining the exchange partner, the real players PA and PB may be combined with priority over the ghost player GP. A player having no created letter 114 is not determined as the object person for exchange. In the present embodiment, as described above, the weather character is not the object person for exchange, so that the ID information related to the snow character is not included in the participation-ID notification.

After determination of the combination, in step S122, referring to the sever storage portion 2a, the player information 10 as the object person for exchange is specified. Next, in step S124, it is determined whether the picture letter is already obtained or not. When the new obtaining flag 109 in the specified player information 10 is in the on-state, it is determined that the picture letter is already obtained. In a case where the picture letter is not obtained yet, the process advances to step S128. In a case where the picture letter is already obtained, the process advances to step S126.

In the present embodiment, as will be described later, when the picture letter is opened, the new obtaining flag 109 is set to the off-state. In a case where the new obtaining flag 109 of the player information 10 is in the on-state, it indicates that the obtained picture letter is not opened yet. In step S126, it is determined whether the player information is used as the ghost information this time or not. In the present embodiment, it is determined that the player information 10 corresponding to the player ID to which the ghost flag is added in the participation-ID notification information is used as the ghost information. In a case where the player information 10 is not used as the ghost information, the process advances to step S128 and a letter exchange process is executed. In the letter exchange process, the obtained information related to the obtained picture letter is generated. The details of the letter exchange process will be described later.

On the other hand, in a case where the player information 10 is used as the ghost information, the exchange process is finished without executing the letter exchange process. As described above, in a case where the player information 10 is used as the ghost information, if the picture letter which is not yet opened exists, the information related to the exchange of picture letters is not updated. Therefore, in a case where the player information 10 is used as the ghost information, a priority is always given to the exchange process executed before. As a result, for example, the exchange process executed at the moment of participating in the game as the real player has a priority. When the letter exchange process finishes, the exchange process is finished.

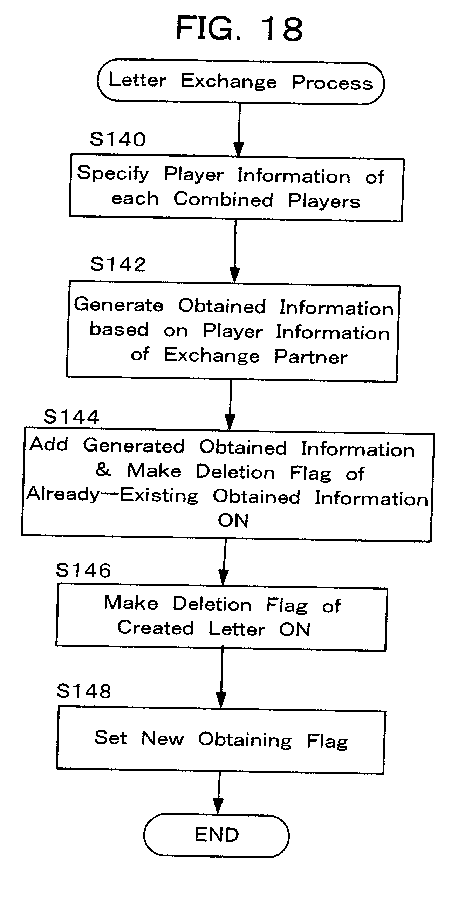

The processes executed in the letter exchange process will be described with reference to a flowchart of FIG. 18. First, in step S140, the player information 10 of each of two players combined is specified. From the player information 20 of one of the players (hereinbelow, called "the partner information 10"), the obtained information of the other player is generated. The obtained information is constructed by, as described above, the obtained letter 117, the obtained item 118, the transmitter information 119, and the transmitter evaluation information 120 in the player information 10.

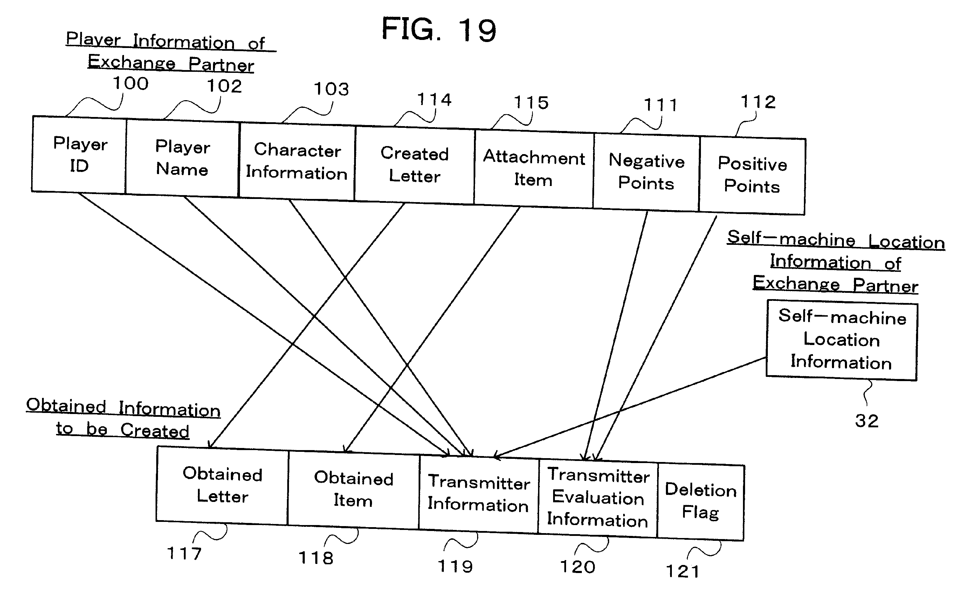

FIG. 19 shows a state where the obtained information is generated. For the obtained letter 117, the created letter 114 in the partner information 10 is set. For the obtained item 118, the attachment item 115 associated with the created letter 114 in the partner information 10 is set. For the transmitter information 119, the player ID 100, the player name 102, and the character information 103 of the partner information 10 are set. For the transmitter evaluation information 120, the negative points 111 and the positive points 112 of the partner information 10 are set. By referring to the participation-ID notification, the self-machine location information 32 corresponding to the exchange partner is included in the transmitter information 119as the transmission location of the transmitter. To the obtained information, the deletion flag 121 is added to the information obtained from the partner information 10.

Referring again to FIG. 18, after the obtained information is generated as described above, the process advances to step S144. When the obtained information already exists in each of the player information 10, the deletion flag 121 is set to the on-state and the generated obtained information is associated with the player information 10. Subsequently, the process advances to step S146, where the deletion flag 116 of the created letter 114 is set to the on-state. In step S148, the new obtaining flag 109 is set to the on-state, and the letter exchange process is finished.

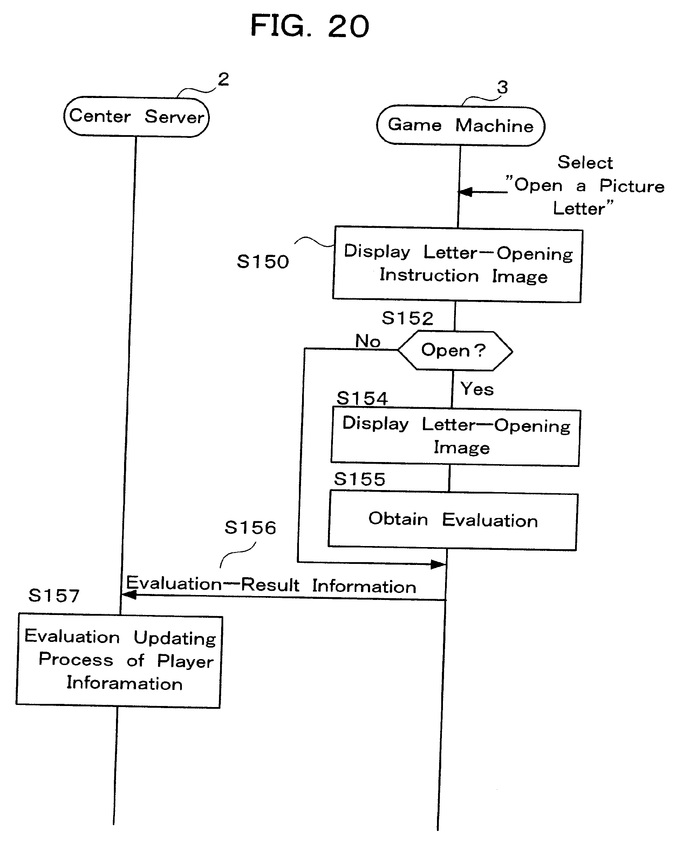

The case where the picture letter open is selected in the home image 60 will be described with reference to FIGS. 20 to 28. First, the flow of processes executed in the game machine 3 in which the picture letter open is selected and the center server 2 will be described with reference to a sequence chart of FIG. 20. The processes in the game machine 3 are controlled by the control unit 3d, and the processes in the center server 2 are controlled by the control portion 2c.

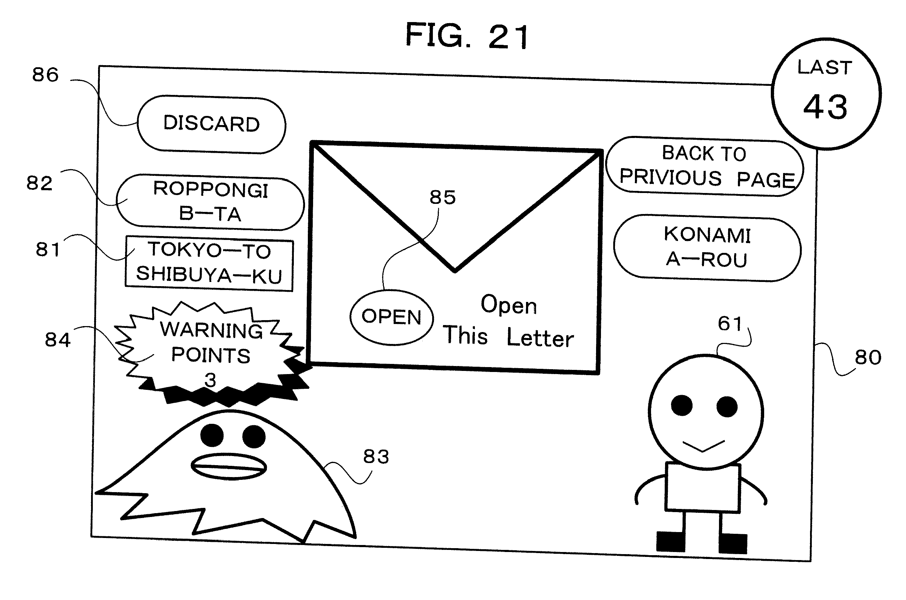

When the picture letter open is selected by the player P in the game machine 3, a letter-opening instruction image is displayed (step S150). FIG. 21 shows the letter-opening instruction image 80 of the present embodiment. In the letter-opening instruction screen 80, a transmission location 81, a name 82, and a character 83 of the exchange partner are displayed based on the transmitter information 119 in the obtained information. The negative points 111 of the exchange partner included in the transmitter evaluation information 120 in the obtained information is displayed as a warning point 84.

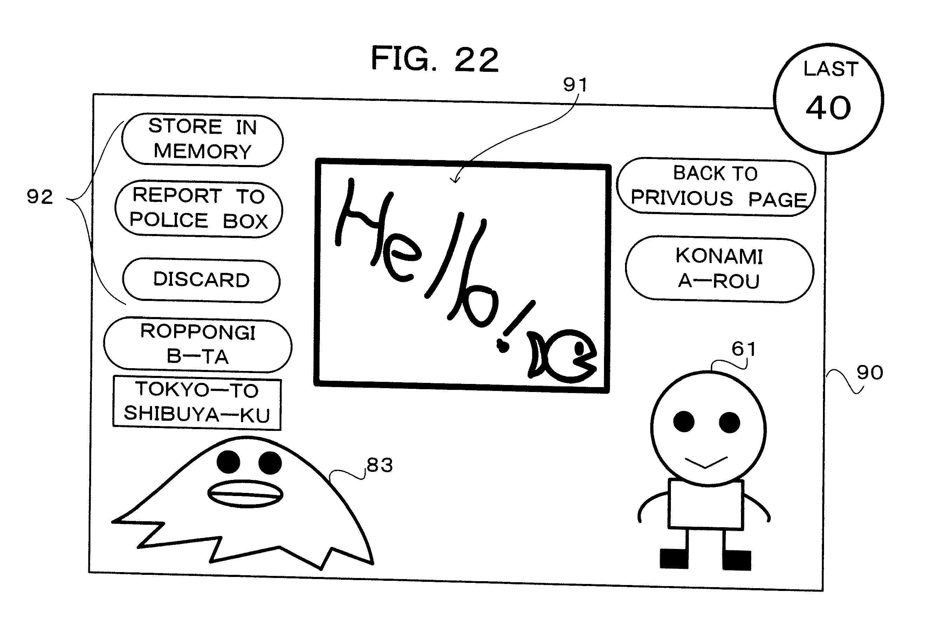

In the letter-opening instruction screen 80, a letter-opening instruction mark 85 for instructing top open the picture letter and a deletion instruction mark 86 for deleting the picture letter without opening the letter are displayed. For example, the player P determines whether the picture letter is opened or not by referring to the warning point 84. In a case of opening the picture letter, the player P has only to select the letter-opening instruction mark 85. On the other hand, in a case of deleting the picture letter without opening, the player P has only to select the deletion instruction mark 86. Referring again to FIG. 20, the game machine 3 determines whether the letter-opening instruction mark 85 is selected or not (step S152). In a case where the mark is selected, the game machine 3 displays an opened letter image 90 as shown in FIG. 22 (step S154). In the opened letter image 90, an opened picture letter 91 which indicates the picture letter from the exchange partner 83 in an open-state is displayed. As the evaluations to the opened picture letter 91, options 92 of "STORE IN MEMORY", "REPORT TO POLICE BOX", and "DISCARD" are prepared.

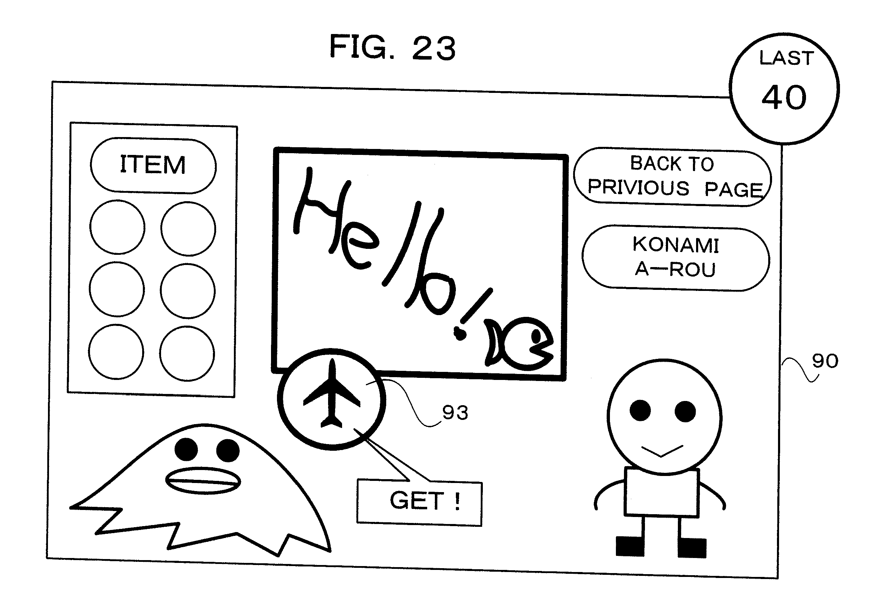

The player P can evaluate the opened picture letter 91 by selecting any one of the options 92. In a case of selecting "STORE IN MEMORY", it means that the player P feels pleasant toward the opened picture letter 91 and selects the positive evaluation as an evaluation result. In a case of selecting "REPORT TO POLICE BOX", it means that the opened picture letter 91 is against public order and morals and the player P feels unpleasant and selects the negative evaluation as an evaluation result. In a case of selecting "DISCRD", it means that only deletion is selected as an evaluation result. In a case where the obtained item 118 exists in the obtained information, an obtained item 93 is also displayed in the opened letter image 90 as shown in FIG. 23.

Referring again to FIG. 20, the game machine 3 obtains the evaluation of the player P as the evaluation result in the opened letter image 90 (step S155), and transmits to the center server 2, evaluation-result information including the evaluation result (step S156). In a case where the deletion instruction mark 86 is selected in the letter-opening instruction screen 80, it means that deletion is selected as the evaluation result, and the evaluation-result information including the evaluation result is transmitted (step S156). The details of the letter-opening process from the display of the letter-opening instruction image to the transmission of the evaluation-result information including the evaluation result will be described later. When the evaluation-result information is received, the center server 2 executes an evaluation updating process (step S157). In the evaluation updating process, the player information 10 of the player P as the evaluator and the player information 10 of the player evaluated are updated on the basis of the evaluation result included in the evaluation-result information. The details of the evaluation updating process will be described later.

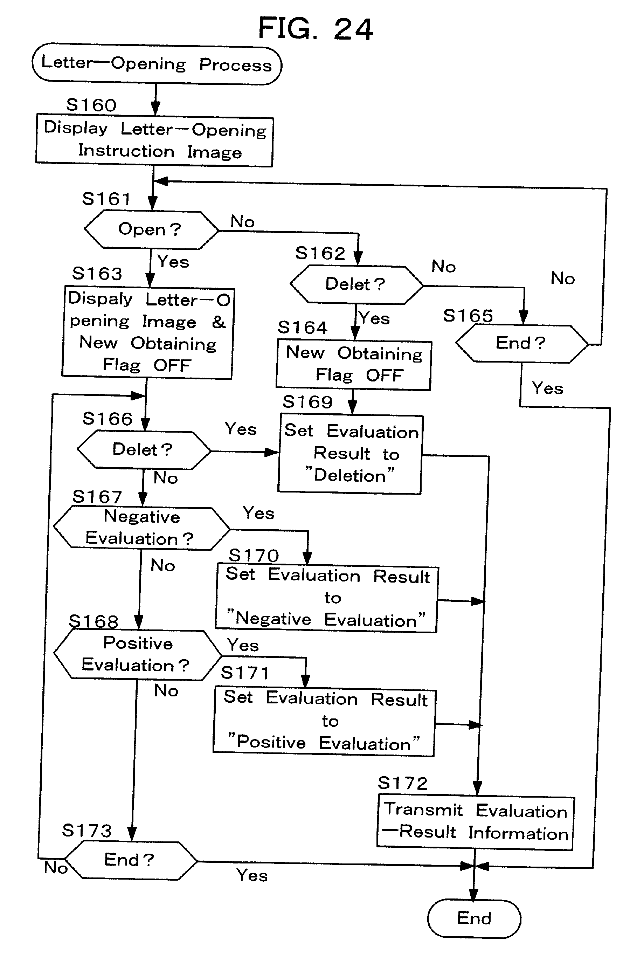

The letter-opening process as the processes executed by the game machine 3 from the display of the letter-opening instruction image 80 to the transmission of the evaluation-result information will be described with reference to a flowchart of FIG. 24. The letter-opening process is controlled by the control unit 3d of the game machine 3. First, in step S160, the letter-opening instruction image 80 is displayed on the basis of the obtained information as described above. When the letter-opening instruction image 80 is displayed, it is determined whether the letter-opening instruction is selected or not in the letter-opening instruction image 80 in step S161. In step S162, it is determined whether the deletion instruction is selected or not in the letter-opening instruction image 80. As described above, when the letter-opening instruction mark 85 is selected, it is determined that the letter-opening instruction is selected. When the deletion instruction mark 86 is selected, it is determined that the deletion instruction is selected.

In a case where the letter-opening instruction is selected, the opened letter image 90 is displayed in step S163, and the new obtaining flag 109 in the player information 10 of the player P is set to the off-state. In a case where the deletion instruction is selected, the process advances to step S164 to set the new obtaining flag 109 to the off-state. After that, the process advances to step S169. In a case where neither the letter-opening instruction nor the deletion instruction is selected, the process advances to step S165, where it is determined whether the letter-opening process should be finished or not. For example, in a case where predetermined time has lapsed or in a case where a predetermined finishing operation is performed by the player P, it is determined that the process should be finished. In a case of determining that the process should be finished, for example, the process returns to the home image 60 and finishes the letter-opening process. In a case of determining that the process should not be finished, the process returns to step S161.

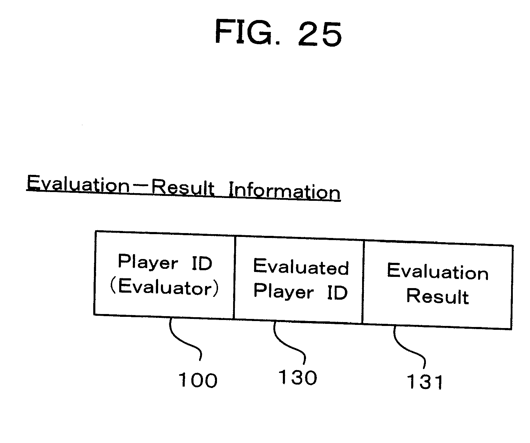

After the opened letter image 90 is displayed in step S163, which evaluation has been selected by the player P is determined in steps S166 to S168. When it is determined that "DISCARD" is selected in the opened letter image 90, the process advances to step S169 to set the evaluation result to "deletion", and generate the evaluation-result information including the evaluation result. Then, the process advances to step S172. The evaluation-result information includes, as shown in FIG. 25, the player ID 100 of the player P as the evaluator, an evaluated player ID 130, and the evaluation result 131. The evaluated player ID 130 can be set to the player ID included in the transmitter information 119 in the obtained information.

Referring again to FIG. 24, in step S172, the evaluation-result information is transmitted to the center server 2. In a case where it is determined that "REPORT TO POLICE BOX", that is, the negative evaluation is selected on the opened letter image 90, the process advances to step S170 to set the evaluation result 131 to the negative evaluation, and generate the evaluation-result information including the evaluation result. Then the process advances to step S172.

In a case where it is determined that "STORE IN MEMORY", that is, the positive evaluation is selected in the opened letter image 90, the process advances to step S171 to sets the evaluation result 131 to the positive evaluation, and generate the evaluation-result information including the evaluation result. Then the process advances to step S172. In a case where any one of the evaluation options 92 is not selected, the process advances to step S173, where it is determined whether the letter-opening process should be finished or not. For example, in a case where the predetermined time has elapsed since the letter-opening process started or in a case where a predetermined finishing process is performed by the player P, it is determined that the process should be finished. In a case where it is determined that the letter-openingprocess should not be finished, the process returns to step S166. In a case where it is determined that the letter-opening process should be finished, for example, the home image 60 is displayed.

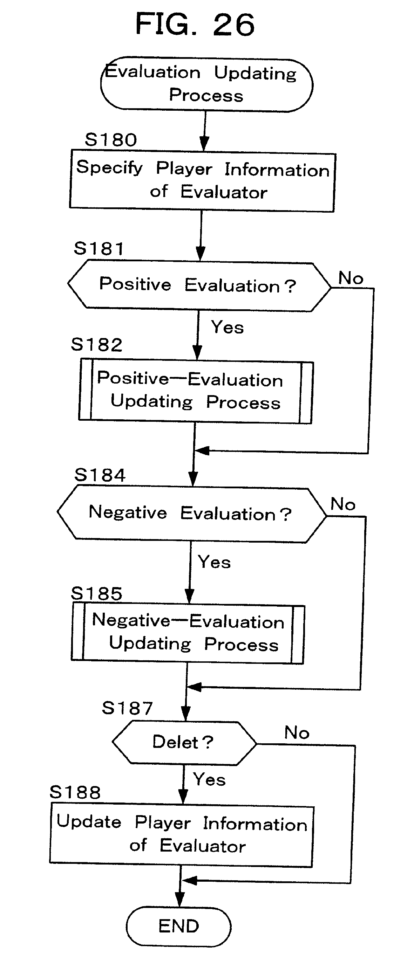

The processes executed in the evaluation updating process will be described with reference to a flowchart of FIG. 26. The evaluation updating process is controlled by the control portion 2c of the center server 2. The following will be described about the processes to be executed by the center server 2 at the moment when the center server 2 receives the evaluation-result information, on the basis that the player PA as the evaluator has evaluated the picture letter of the player PB as the evaluated player. First, in step S180, the player information 10 of the evaluator is specified. In the present embodiment, the player information 10 of the player PA as the evaluator is specified based on the player ID 100 in the evaluation-result information. Subsequently, in step S181, it is determined whether the evaluation result 131 is the positive evaluation or not. In a case of the positive evaluation, the process advances to step S 182, where a positive-evaluation updating process is executed. The positive-evaluation updating process will be described later.

In a case of the positive evaluation, the process advances to step S184, where it is determined whether the evaluation result 131 is the negative evaluation or not. In a case of the negative evaluation, the process advances to step S185 to execute the negative-evaluation updating process. The negative-evaluation updating process will be described later. In a case where the evaluation result 131 is not the negative evaluation, the process advances to step S187 to determine whether the evaluation result 131 is deletion or not. In a case where the evaluation result 131 is deletion, the process advances to step S188 to update only the player information 10 of the player PA as the evaluator. In the present embodiment, the deletion flag 121 of the obtained information of the player PA is set to the on-state, and the new obtaining flag 109 is set to the off-state. In a case where the evaluation result 131 is not deletion, the evaluation updating process is finished.

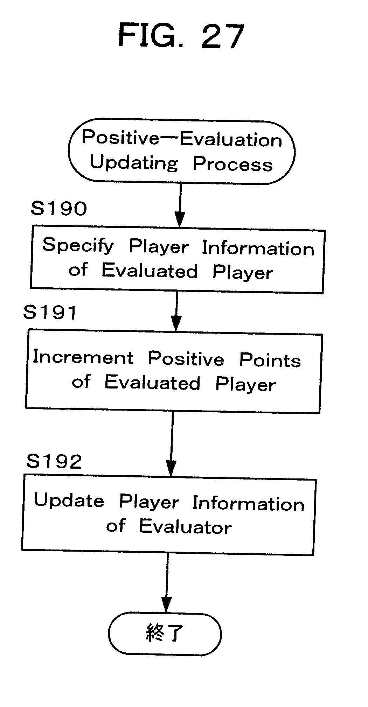

The positive-evaluation updating process will be described with reference to a flowchart of FIG. 27. First, in step S190, the player information 10 of the evaluated player is specified based on the evaluated player ID 130 in the evaluation-result information. In the present embodiment, the player information 10 of the player PB is specified. Next, in step S191, the positive points 112 in the player information 10 of the player PB is incremented by one. Subsequently, in step S192, the player information 10 of the player PA as the evaluator is updated. In the present embodiment, the information related to the evaluated player, player PB is added to the positive evaluator information 122 of the player PA. Examples of the information related to the player PB to be added to the positive evaluator information 122 includes the player ID 100, the player name 102, the character information 103, the class 105, date, and the like. The new-positive-evaluation flag 107 of the player PA is set to the on-state, and the new obtaining flag 109 is set to the off-state.

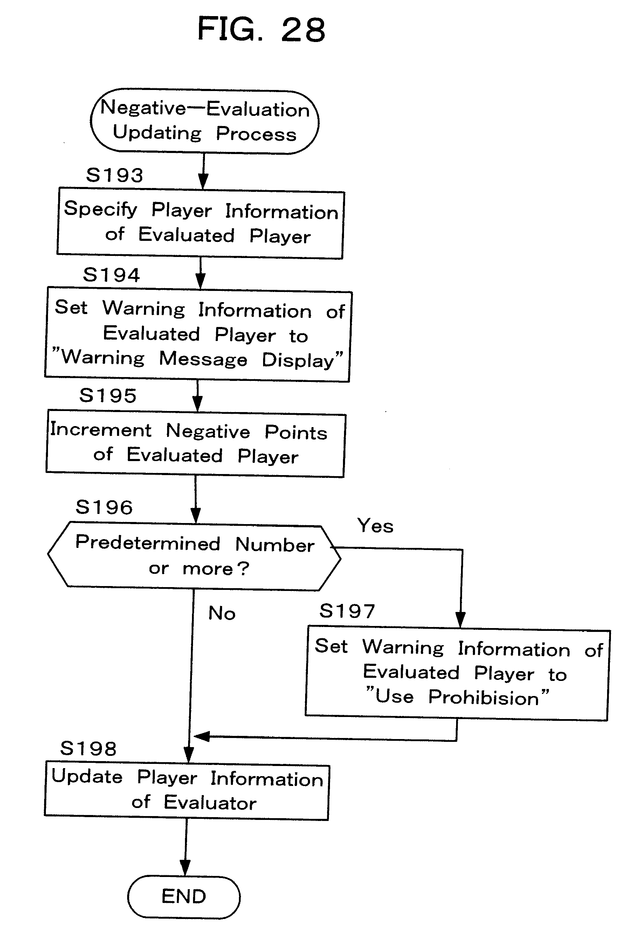

The negative-evaluation updating process will be described with reference to a flowchart of FIG. 28. First, in step S193, the player information 10 of the evaluated player is specified based on the evaluated player ID 130 in the evaluation-result information. In the present embodiment, the player information 10 of the player PB as the evaluated player is specified. Subsequently, in step S194, the warning information 106 of the player PB is set to "warning message display". In step S195, the negative points 111 of the player PB is incremented by one. Next, in step S196, it is determined whether the negative points 111 is equal to or larger than a predetermined value or not.

In a case where the negative points 111 is equal to or larger than the predetermined value, the process advances to step S197 to set the warning information 106 of the player PB to "use prohibition". Then the process advances to step S198. In a case where the negative points 111 is less than the predetermined value, the process advances from step S196 to step S198. In step S198, the player information 10 of the player PA as the evaluator is updated. In the present embodiment, the new obtaining flag 109 of the player PA is set to the off-state, and the deletion flag 121 of the obtained information is set to the on-state. After updating the player information 10, the negative-evaluation updating process is finished.

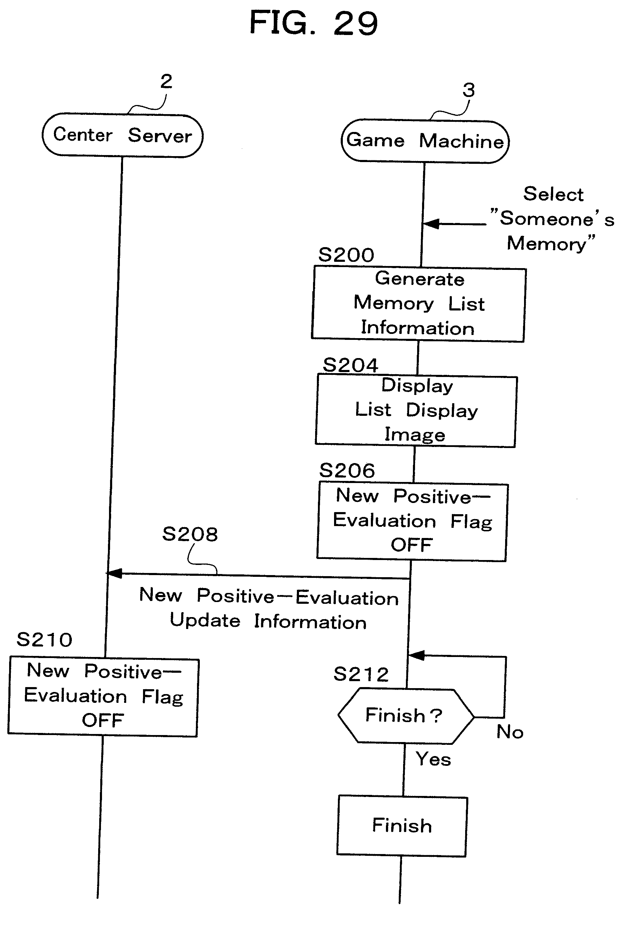

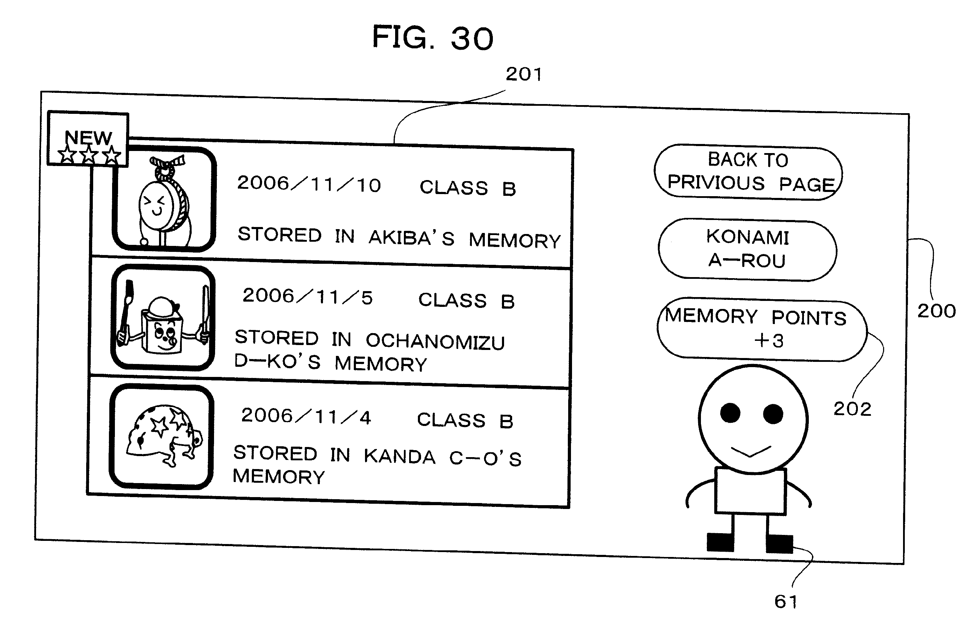

Finally, the processes executed in the game machine 3 and the center server 2 in a case where the positive evaluator list is selected in the game machine 3 will be described with reference to a sequence chart of FIG. 29. The processes executed in the game machine 3 are controlled by the control unit 3d, and the processes executed in the center server 2 are controlled by the control portion 2c. When the positive evaluator list is selected by the player P in the game machine 3, memory list information is generated on the basis of the positive evaluator information 122 in the player information 10 of the player P (step S200). Subsequently, a list display image 200 including a memory list 201 based on the memory list information and an accumulated points 202 based on the positive points 112 as shown in FIG. 30 is displayed on the monitor 3c (step S204).

In the memory list 201, the name, the character, the class, the date, and the like of the player who positively evaluated on the picture letter of the player P are shown. Referring again to FIG. 29, the game machine 3 sets the new positive-evaluation flag 107 of the player P to the off-state (step S206), and transmits the new positive-evaluation update information including the player ID of the player P to the center server 2 (step S208).

The center server 2 which has received the new-positive-evaluation update information sets the new-positive-evaluation flag of the player information 10 of the player P in the sever storage portion 2a to the off-state (step S210). The game machine 3 which has transmitted the new-positive-evaluation update information determines whether the positive evaluator list should be finished or not (step S212). For example, in a case where predetermined time has elapsed after entering the positive evaluator list or in a case where a predetermined finishing operation is performed by the player, it is determined that the positive evaluator list should be finished. In a case of the end, the positive evaluator list is finished and, for example, the home image 60 or the continuation instruction screen 70 is displayed.

The game machine storage portion 3e of the game machine 3 functions as the self-information storage device by storing the self-weather information 33, and functions as the character information storage device by storing the special character information 40. The control unit 3d of the game machine 3 functions as the participation notifying device by executing the processes in the step S50 and the step S55. The game master portion 3f of the game machine 3 functions as the virtual player setting device by executing the process in the step S66, and functions as the virtual operation determining device by the description in paragraph 0050. Thereby, the game machine 3 where the game master portion 3f is working functions as the game server. The server storage portion 2a functions as the server environment information storage device by storing the server weather information 20. The control portion 2c of the center server 2 functions as the environment information updating device by executing the processes from step S2 to step S5. Thereby, the center server 2 functions as the environment server. Additionally, the control unit 3d of the game machine 3 functions as the self-machine environment information updating device by executing the processes from step S6 to step S10, and functions as the master activating device by executing the process in step S54.

The present invention is not limited to the foregoing modes but can be executed in various modes. For example, for the player to whom the use prohibition is set, the use prohibition may be cancelled by the center server 2 in a case where a predetermined condition is satisfied. The predetermined condition includes a predetermined period and a predetermined operation by the player to whom the use prohibition has been set. The processes executed by the center server 2 may be executed by a plurality of servers in consideration of the communication traffic.

The game machine 3 may be mounted not only within one country but also at any locations in the world. In this case, the weather information in observation locations outside of the country besides within the country is held as the server weather information 20. The competition game executed in the game machines 3 is not limited to the game played by four players. The game played by any plural number of players can be adopted to the present invention. Moreover, the game is not limited to the competition game but may be a game in which a plurality of players cooperate each other. Further, in a predetermined case, a picture letter may be transmitted from the game system 1 to a player. For example, the birthday of a player is included in the player information 10 in advance. When the birthday has come, a picture letter of birthday may be transmitted from the game system 1. In this case, it is sufficient for the center server 2 to set a predetermined birthday picture letter as the new obtaining letter 117 in the player information 10 of the player whose birthday has come.

## Claims

1. A game system comprising a plurality of game machines and a game server, the game machines and the game server capable of communicating data with each other via a network, among the plurality of game machines, a game being executed in which characters associated with players operating the game machines appear as the players, and progress of the game being controlled by the game server,
wherein the game machine comprises:
a game machine information storage device for storing self-machine information including self-machine environment information indicative of environment information on environment of a place where the game machine itself is mounted; and
a participation notifying device for, when a player operating the self-machine participates in the game, transmitting to the game server, a participation notification including information on the player operating the self-machine and the self-machine environment information, and
the game server comprises:
a character information storage device for storing various environment information and information on environment characters prepared according to each kind of environment information;
a virtual player setting device for selecting an environment character associated with the environment information indicated by the self-machine environment information included in the received participation notification with reference to the character information storage device, and setting the selected environment character as a character of a virtual player; and
a virtual operation determining device for making the environment character set as the character of the virtual player appear in the game, and determining operations of the environment character during the game.

2. The game system according to claim 1, wherein the game executed by the plurality of game machines is a game requiring a predetermined number or more of players and,
the virtual player setting device, in a case where the number of participation notifications received from the game machine is less than the predetermined number, sets the environment character as the character of the virtual player to arrange at least the predetermined number of players.

3. The game system according to claim 1 or 2, further comprising an environment server having:
a server environment information storage device for storing server environment information in which each of the plurality of game machines, an observation location closest to the game machine among a plurality of observation locations in which a state for obtaining the environment information is observed, and the environment information of the observation location are associated with each other; and
an environment information updating device for obtaining environment the information in each of the observation locations at a predetermined timing from a predetermined observation information database providing environment information in each of the observation locations to update the server environment information,
wherein the game machine comprises a self-machine environment information updating device for obtaining the environment information associated with the game machine itself from the server environment information at a predetermined timing to update the self-machine environment information in the environment information.

4. The game system according to claim 3, wherein specific environment information in the environment information in the observation information database is set as the environment information in the character information storage device.

5. The game system according to claim 4, wherein when the selected environment character further satisfies a predetermined condition, the device for adjusting the number of players sets the selected environment character as the character of the virtual player.

6. The game system according to any one of claims 1 to 5, wherein the game machine comprises:
a game master portion functioning as the game server; and
a master activating device for activating the game master portion to make the game machine itself function as the game server in a predetermined case.
